(19) **Europäisches Patentamt**

**European Patent Office**

**Office européen des brevets**

(11) **EP 0 974 210 B1**

(12) **EUROPÄISCHE PATENTSCHRIFT**

(45) Veröffentlichungstag und Bekanntmachung des Hinweises auf die Patenterteilung:
**09.07.2003  Patentblatt 2003/28**

(21) Anmeldenummer: **98917042.8**

(22) Anmeldetag: **21.03.1998**

(51) Int Cl.$^7$: **H04H 1/00**

(86) Internationale Anmeldenummer:
**PCT/EP98/01658**

(87) Internationale Veröffentlichungsnummer:
**WO 98/047248 (22.10.1998 Gazette 1998/42)**

(54) **SYSTEM ZUR ÜBERTRAGUNG HOCHRATIGER MEHRWERTDIENSTE IM TERRESTRISCHEN DIGITALEN RUNDFUNK**

SYSTEM FOR TRANSMITTING HIGH-SPEED ADDED-VALUE SERVICES IN TERRESTRIAL DIGITAL BROADCASTING

SYSTEME POUR LA TRANSMISSION A CADENCE RAPIDE DE SERVICES A VALEUR AJOUTEE DANS LA RADIOCOMMUNICATION NUMERIQUE TERRESTRE

(84) Benannte Vertragsstaaten:
**AT BE CH DE DK ES FI FR GB GR IE IT LI LU MC NL PT SE**

(30) Priorität: **11.04.1997  DE 19715022**

(43) Veröffentlichungstag der Anmeldung:
**26.01.2000   Patentblatt 2000/04**

(73) Patentinhaber: **Deutsche Telekom AG**
**53113 Bonn (DE)**

(72) Erfinder:
• **ZIMMERMANN, Gerd**
  **D-64331 Weiterstadt (DE)**
• **SCHULZE, Henrik**
  **D-59872 Meschede (DE)**

(56) Entgegenhaltungen:
**FR-A- 2 601 210          GB-A- 2 261 142**

• **"OFFICIAL EBU TECHNICAL TEXTS EBU STATEMENT D74-1992 EBU EXPECTATIONS FOR FIRST-GENERATION CONSUMER DAB RECEIVERS APPROVED FOR PUBLICATION DECEMBER 1992" EBU REVIEW- TECHNICAL, Nr. 255, 1.Januar 1993, Seiten 57-63, XP000354456**

**Beschreibung**

Die Erfindung betrifft ein Verfahren zum Senden von hochratigen Mehrwertdiensten gemäß Oberbegriff des Anspruchs 1.

Die Erfindung liegt mit anderen Worten auf dem Gebiet des zukünftigen digitalen Hörfunks "Digital Audio Broadcasting" (DAB), dessen Standardisierung im Februar 1995 durch die European Telecommunication Standards Institute erfolgte. DAB eignet sich zur Übertragung qualitativ hochwertiger Audioprogramme zu mobilen, portablen und festinstallierten Empfängern, wobei die eigentliche Zielsetzung der mobile Empfang ist. Eine Besonderheit von DAB besteht in der Übertragbarkeit von Zusatzdaten mit normalerweise verhältnismäßig niedrigen Datenraten, beispielsweise programmbegleitende Information, Verkehrsinformation und dergleichen. Mehrere Audioprogramme bzw. Datendienste sind in einem so genannten DAB-Ensemble zusammengefasst und werden gemeinsam mittels des COFDM-Mehrträger-Übertragungsverfahrens (Coded Orthogonal Frequency Division Multiplexing) in einem Frequenzblock der Breite von etwa 1,5 MHz abgestrahlt.

Neuerdings besteht bei Programmanbietern großes Interesse, mit DAB auch Mehrwertdienste, wie etwa Videoprogramme mit höherer Datenrate zu übertragen. Diese Datenrate kann im Grenzfall die Kapazität des gesamten DAB-Ensembles belegen. Ein Problem stellt dabei der Fehlerschutz dar, der bei der im DAB-System maximal nutzbaren Nettodatenrate von 1,728 Mbit/s so schwach ist, dass das System nicht uneingeschränkt für Mobilempfang geeignet ist. Eine störsichere Übertragung ist deshalb bei akzeptablem Fehlerschutz nur im Bereich von Datenraten bis ca. 1,2 Mbit/s möglich.

Bezüglich des DAB-Systems stellt das X-DAB-System (Extended DAB) eine abwärts kompatible qualitativ höherwertige Alternative zu dem DAB-System dar, wobei beim X-DAB-System die physikalischen Parameter des eingesetzten OFDM-Mehrträger-Übertragungsverfahrens sowie die grundlegende Struktur eines Übertragungsrahmens gemäß dem DAB-System unverändert bleibt. Für spezielle X-DAB-Datenkanäle lässt sich im Vergleich zum DAB-System eine bessere Störfestigkeit bei gleichzeitig höherer Datenrate durch den Einsatz einer kodierten Modulation erzielen (Mehrstufen-Codes in Verbindung mit: einer höher stufigen Phasenmodulation von beispielsweise 8-PSK). Durch Implementierung des X-DAB-Systems ist pro DAB-Frequenzblock jederzeit eine Nettodatenrate von 1,728 Mbit/s uneingeschränkt zum mobilen Teilnehmer übertragbar. Es ist sogar eine maximale Rate von über 2 Mbit/s möglich, jedoch unter Erhöhung des erforderlichen empfängerseitigen Signal-Rausch-Abstands im Vergleich zur geringeren Datenrate.

Sollen qualitativ hochwertige Mehrwertdienste, wie beispielsweise Videoprogramme in PAL-Qualität zum mobilen Teilnehmer übertragen werden, sind die durch das DAB- bzw. X-DAB-System erreichbaren Datenraten noch zu gering. Zur Zeit steht bei der zuständigen Behörde ETSI ein Standard für die terrestrische Ausstrahlung von digitalem Fernsehen (DVB-T) kurz vor der Veröffentlichung. Mit dem DVB-T-System sind zwar hohe Datenraten übertragbar - nämlich maximal bis etwa 30 Mbit/s pro Fernsehkanal einer Bandbreite von 7 MHz im VHF-Bereich bzw. 8 MHz im UHF-Bereich - jedoch ist das Systemkonzept, das ebenfalls auf dem COFDM--Verfahren basiert, in erster Linie auf die Versorgung stationärer und tragbarer Empfänger ausgelegt. Das heißt, ein Mobilempfang ist selbst dann nur sehr eingeschränkt möglich, wenn auf eine nicht standardkonforme Erweiterung des DVB-T-Systems hinsichtlich der Modulationsart zurückgegriffen wird (siehe hierzu DE 43 19 217 C2). Um dabei nur annähernd in den Bereich des beim DAB-System bereitstehenden empfängerseitigen Signal-Rausch-Abstandes zu kommen, ist beim DVB-T-System höchstens eine Vier-Phasen-Modulation auf den Unterträgern einsetzbar, die auch beim DAB-System verwendet wird. Das heißt, die pro Fernsehkanal maximal übertragbare Datenrate beläuft sich in diesem Fall auf noch etwa 6 Mbit/s.

Im Zusammenhang mit dem DAB-System ist in der DE 43 06 590 A1 vorgeschlagen worden, in einem Fernsehkanal gleichzeitig vier nebeneinander liegende Frequenzblöcke abzustrahlen, auf die der entsprechend quellenkodierte Datenstrom (beispielsweise MPEG-2 für Video und Audio) gemultiplext wird, wodurch mit einem breitbandigen DAB-Empfänger, zusammengesetzt aus vier parallel angeordneten Empfängern mit abschließendem Ausgangs-Combiner, eine Nettodatenrate von maximal 4 x 1,728 = 6,9 Mbit/s auswertbar ist. Bei Einsatz eines mobilen Verhältnissen angepassten Fehlerschutzes beträgt diese Nettodatenrate immerhin noch ca. 4,6 Mbit/s. Es besteht jedoch ein Bedarf, diese Datenrate noch zu vergrößern, um die Übertragungsqualität zu optimieren.

Die Aufgabe der vorliegenden Erfindung besteht darin, ein Verfahren zum Senden von hochratigen Mehrwertdiensten bereitzustellen, das eine Übertragung mit hoher Datenrate und Gewährleistung höherer Störsicherheit als bislang beim DAB-System zuverlässig gewährleistet.

Gelöst wird diese Aufgabe hinsichtlich des Sendeverfahrens durch die Merkmale des Anspruchs 1.

Mit anderen Worten basiert die Erfindung demnach auf dem Senden von Videoprogrammen insbesondere zu mobilen Teilnehmern, mit mindestens zwei gleichzeitig ausgestrahlten, nebeneinander liegenden X-DAB-Frequenzblöcken in einem Gleichwellennetz, auf die ein dem jeweiligen Diensteinhalt entsprechend quellencodierter digitaler Eingangsstrom gemultiplext wird.

Erfindungsgemäß ist vorgesehen, dass zwischen den X-DAB-Frequenzblöcken eine freie Trägerfrequenz eingefügt wird. Somit kann auf einen Schutzabstand von 0,2 MHz oder größer zwischen zwei Frequenzblöcken verzichtet werden. Dadurch reduziert sich der Bandbreitenbedarf für die X-DAB-Frequenzblöcke, so dass es vorteilhaft möglich ist, innerhalb eines Kanals mit vorgegebener Bandbreite eine höhere Anzahl von nebeneinander liegenden X-DAB-Frequenzblöcken innerhalb der vorgegebenen Bandbreite zu übertragen, wodurch eine höhere Übertragungsrate möglich ist.

Um die Übertragungsrate zu erhöhen, ist in bevorzugter Ausgestaltung der Erfindung vorgesehen, dass der Eingangsdatenstrom in mehrere Einzeldatenströme separiert wird, wobei diese Einzeldatenströme unterschiedliche Bedeutung beziehungsweise Wichtigkeit für die Qualität des Dienstes besitzen, und dass die Einzeldatenströme nach ihrer Bedeutung beziehungsweise Wichtigkeit auf einzelne X-DAB-Frequenzblöcke verteilt werden. Mit dieser auch als hierarchische Übertragung bezeichneten Übertragung eines Datenstroms ist es möglich, den Fehlerschutz für wichtigere Teildatenströme beziehungsweise Einzeldatenströme zu verstärken und für unwichtigere abzusenken, dafür aber bei den unwichtigeren Teildatenströmen eine größere Datenrate zu übertragen. Damit lässt sich insgesamt die Übertragungsrate erhöhen.

Vorteilhafterweise werden beim erfindungsgemäßen Senden die Ausgangssignale der vier X-DAB-Schmalbandsender, welche die vier X-DAB-Frequenzblöcke bereitstellen, zu einem gemeinsamen Ausgangssignal zusammengefasst und daraufhin gesendet, zu welchem Zweck eine Summierschaltung vorgesehen ist, deren Ausgang an eine HF-Stufe angeschlossen ist. Eingangsseitig erfolgt beim Sendeprozess eine Aufteilung des Eingangsdatenstroms auf die vier X-DAB-Sender mittels einer Aufteilungsschaltung (Service Splitting).

Alternativ zum Summieren der Ausgangssignale von den mehreren X-DAB-Sendern ist zur Verhinderung von Störungen der Orthogonalitätsbedingung zwischen den Unterträgern der benachbarten Frequenzblöcke vorteilhafterweise vorgesehen, dass die den mehreren DAB-Sendern entsprechenden Signale auf der Ebene der digitalen Basisbandsignalverarbeitung nach einer differentiellen Modulation der Unterträger von Einzelblöcken noch vor der eigentlichen OFDM-Signalgenerierung zusammengefasst werden. Vorteilhafterweise erfolgt dabei die Generierung der OFDM-Signale durch Inverse Schnelle-Fourier-Transformation (IFFT), gefolgt von einer D/A-Wandlung und einer I/Q-Modulation.

Die Bündelung von mehreren, beispielsweise vier X-DAB-Frequenzblöcken zugunsten eines Breitband-X-DAB-, BX-DAB-Systems innerhalb eines normalen Fernsehkanals ermöglicht die störungssichere Übertragung von Mehrwertdiensten mit hoher Datenrate insbesondere zu mobilen Empfängern mit einer typischen Datenrate von 6,9 Mbit/s.

Das erfindungsgemäße Systemkonzept bietet hohe Flexibilität bezüglich unterschiedlicher Fehlerschutzprofile und damit Datenraten, welche Profile bei der Übertragung eines Datenrahmens innerhalb eines Frequenzblocks und auch zwischen den Blöcken bezüglich der einzelnen Teildatenströme des Quellensignals umschaltbar sind. Im Gegensatz zu dem vorstehend erläuterten DVB-T-System ist damit sowohl ein gleichgewichtiger als auch ein ungleichgewichtiger Fehlerschutz realisierbar. Das Systemkonzept eignet sich anspruchsgemäß auch für eine Art hierarchische Übertragung, wobei im Gegensatz zum DVB-T-System der Unterschied nicht in der Modulationsart auf den einzelnen OFDM-Unterträgern liegt, sondern in der Anzahl der auszuwertenden Frequenzblöcke.

Nachfolgend wird die Erfindung anhand der Zeichnung beispielhaft näher erläutert. Es zeigen:

Fig. 1 die Struktur des Übertragungsrahmens beim X-DAB-System pro Frequenzblock;

Fig. 2 ein Blockschaltbild eines Schmalband-X-DAB-Senders;

Fig. 3 ein Blockschaltbild eines Schmalband-X-DAB-Empfängers;

Fig. 4 die Verteilung der X-DAB-Frequenzblöcke innerhalb eines analogen Fernsehkanals als Bestandteil der Gewinnung eines Sendesignals gemäß dem erfindungsgemäßen Sendeverfahren;

Fig. 5 ein Blockschaltbild eines Breitband-X-DAB-Senders;

Fig. 6 ein Blockschaltbild eines Breitband-X-DAB-Senders;

Fig. 7 ein Blockschaltbild eines Breitband-X-DAB-Empfängers und

Fig. 8 ein Blockschaltbild eines Breitband-X-DAB-Empfängers.

Wie bereits einleitend erwähnt, besteht ein Bedarf, durch neue Systemkonzepte Mehrwertdienste mit höheren Datenraten auch für mobile Empfänger ohne nennenswerte Qualitätsverluste bereitstellen zu können. Durch einen Rückgriff auf bereits vorhandene Systeme wie DAB oder wie im erfindungsgemäßen Fall auf X-DAB als Basisstruktur lassen sich die Kosten für die sender- bzw. empfängerseitige Hardware-Entwicklung deutlich senken.

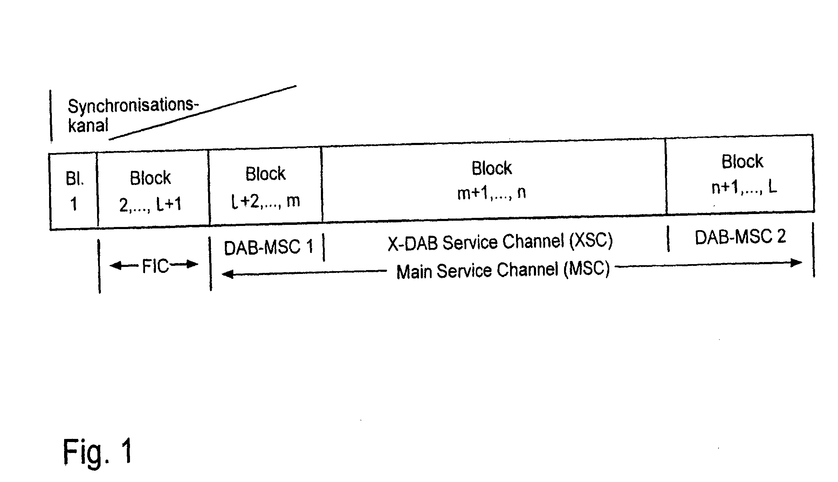

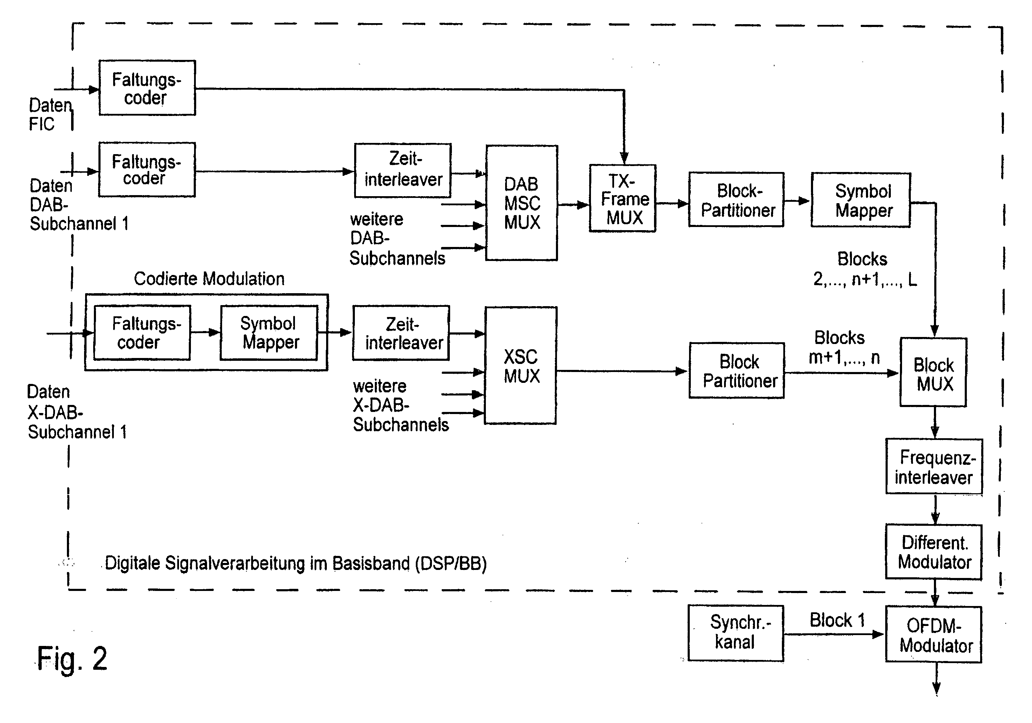

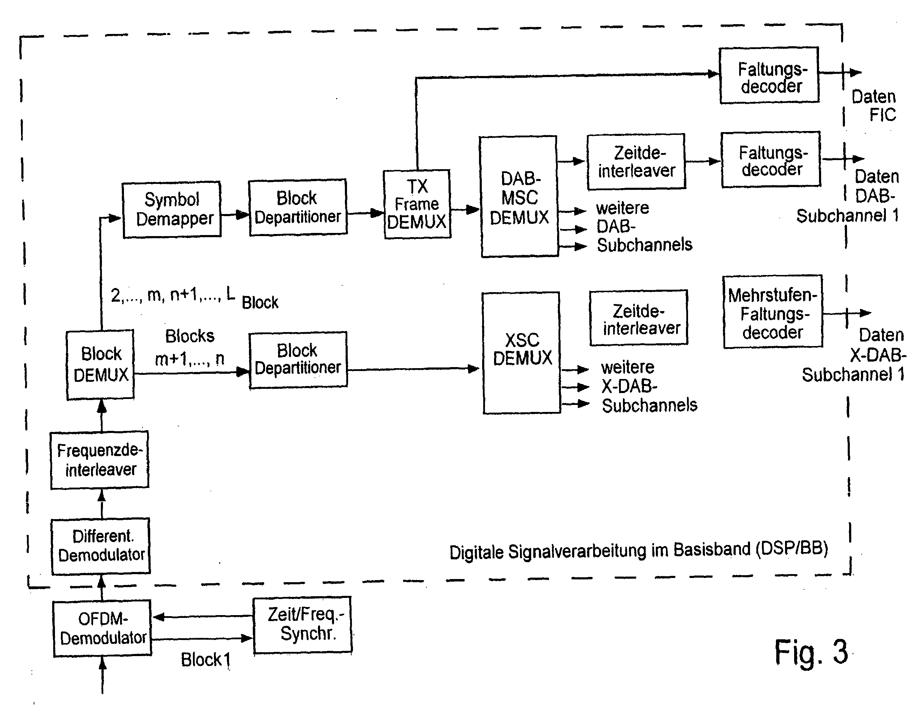

Beispielsweise existieren für das DAB-System vier verschiedene Parametersätze (Transmission Modi), welche die physikalischen Parameter des Übertragungsrahmens und des OFDM-Verfahrens beschreiben. Diese Parametersätze sind beim X-DAB-System identisch vorhanden. Beim so genannten Transmission Mode II entspricht beispielsweise ein Rahmen einer Dauer von 24 ms und beinhaltet L = 76 OFDM-Symbole, von denen das erste durch das Synchronisationssignal und die nächsten 1 = 3 durch den Steuerkanal (Fast Information Channel, FIC) belegt werden, wie in Fig. 1 gezeigt. Die restlichen Symbole, die den Hauptdatenkanal (Main Service Channel, MSC) bilden, stehen für die Nutzdatenübertragung zur Verfügung. Ein Block im Übertragungsrahmen entspricht dem Dateninhalt, der innerhalb eines OFDM-Symbols übertragen werden kann. Jeder Dienst belegt im MSC einen eigenen Bereich, den so genannten Subchannel. Im MSC erfolgt auch die Einbindung von XSC (X-DAB Service Channel), der im Extremfall. die gesamte MSC-Kapazität einnehmen kann. Dieser Extremfall tritt jedoch nur ein, wenn ein Dienst mit einer hohen Datenrate übertragen werden soll, d. h., der MSC bzw. XSC beinhaltet in diesem Fall nur einen einzigen Subchannel. Die Anzahl K von verwendeten Unterträgern beim OFDM-Verfahren ist bei den einzelnen Transmission Modi ebenfalls unterschiedlich und reicht von K = 192 bei Mode III bis zu K = 1536 bei Mode I. Fig. 2 und 3 zeigen entsprechende Blockschaltbilder eines X-DAB-Senders bzw. -Empfängers.

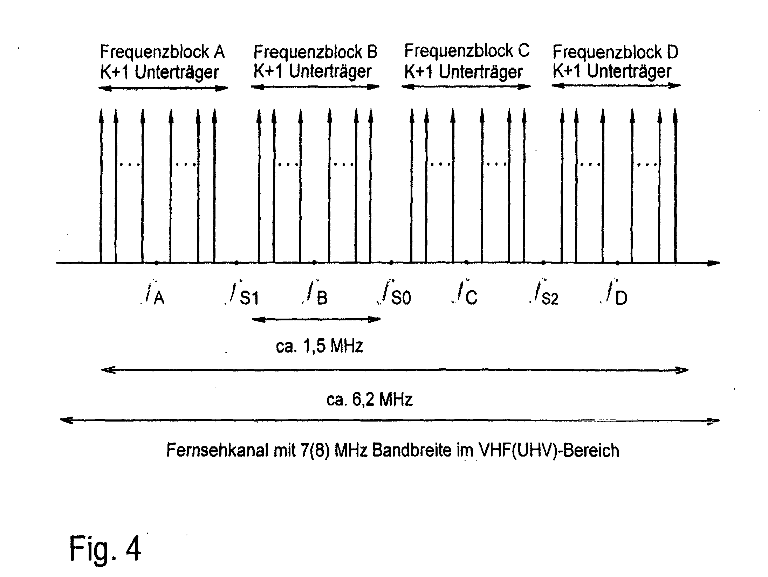

In Übereinstimmung mit dem erfindungsgemäßen Vorschlag werden mehrere, aktuell bis zu vier schmalbandige X-DAB-Frequenzblöcke, die gleichzeitig von allen Sendern eines Gleichwellennetzes ausgestrahlt werden, in einem Fernsehkanal von 7 bzw. 8 MHz Bandbreite (VHF- bzw. UHF-Bereich) untergebracht, wie in Fig. 4 gezeigt. Die dadurch maximal erzielbare Datenrate pro Kanal durch Bündelung der Kapazität der einzelnen Frequenzblöcke, d. h. der Ensembleinhalte, beträgt bei vier Frequenzblöcken etwa 8,3 Mbit/s. Bei Einsatz eines auf den Mobilempfang angepassten Fehlerschutzes bleiben davon immerhin noch 6,9 Mbit/s zur Nutzdaten-Übertragung übrig. Das heißt, pro Datenkanal können ca. 4 MPEG-2 kodierte Videoprogramme in VHS-Qualität einschließlich Stereoton bzw. ein bis zwei Programme in PAL-Qualität übertragen und mobil empfangen werden.

Zusätzlich stehen die Kapazitäten der vier Steuerkanäle (FIC) zur Zusatzdatenübertragung (Fast Information Data Channel, FIDC) mit jeweils etwa 32 kbit/s (Mode III:43 kbit/s) zur Verfügung.

Vorteilhaftweise werden die Frequenzblöcke so angeordnet, dass die einzelnen Unterträger aller Blöcke jeweils im gleichen Frequenzraster $\Delta f$ liegen. Das Frequenzraster $\Delta f$ wird durch die Nutzintervalldauer $T_U$ eines OFDM-Symbols festgelegt: $\Delta f = 1/T_U$. Der kleinste Trägerabstand liegt bei Mode I vor: $\Delta f = 1$ kHz, und der größte bei Mode III: $\Delta f = 8$ kHz.

Auf einem größeren Schutzabstand von 0,2 MHz, wie er bei der üblichen Frequenzvergabe für das DAB-System zur Vermeidung von Nachbarkanalinterferenzen zwischen den einzelnen Frequenzblöcken erforderlich ist, kann vorteilhafterweise verzichtet werden. Lediglich eine einzige, nicht belegte Trägerfrequenz wird zusätzlich zwischen den Frequenzblöcken bevorzugt eingefügt. Der Bandbreitenbedarf für die vier Frequenzblöcke ergibt sich unter Berücksichtigung der Tatsache, dass auch der Träger auf der jeweiligen Blockmittenfrequenz nicht belegt ist, zu:

$$K'^*\Delta f = (4^*(K + 1) + 3)^*\Delta f = (4^*K + 7)^*\Delta f.$$

Bei Einsätzen der bekannten DAB- bzw. X-DAB-Parameter ergibt sich dabei für alle Modi ein Wert von etwa 6,2 MHz. Dieses Systemkonzept wird im Folgenden als BX-DAB (Breitband X-DAB) bezeichnet.

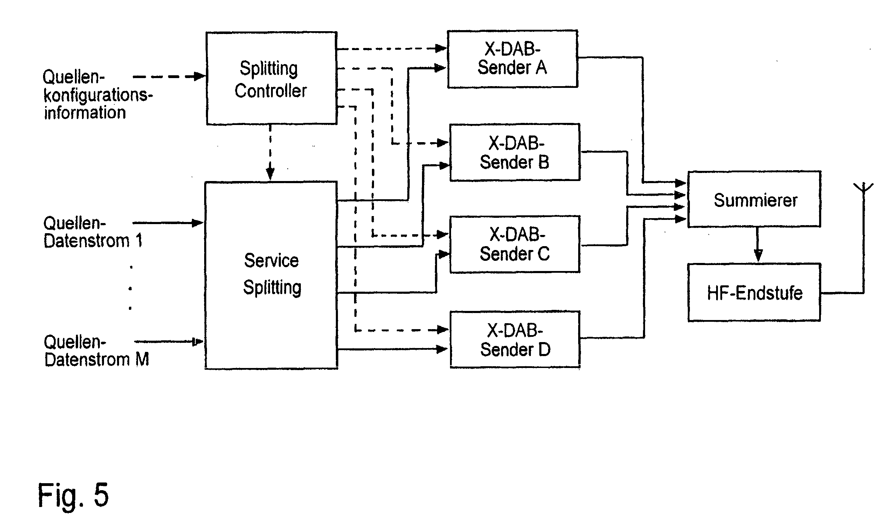

Grundsätzlich ist das angestrebte breitbandige Sendesignal nach einer entsprechenden Aufteilung (Service Splitting) des gegebenenfalls von mehreren Quellen stammenden Eingangsdatenstroms durch eine mehrfache, aktuell vierfache Parallelschaltung von bekannten X-DAB-Sendern gemäß Fig. 2 und anschließender Addition der Ausgangssignale dieser Sender erzeugbar. Dieser Sachverhalt ist in Fig. 5 dargestellt. Ein separater Controller überwacht dabei das Service Splitting und generiert die erforderliche Multiplex-Information (MCI) für den FIC. Aufgrund von Ungenauigkeiten der jeweiligen Sendeoszillatoren mit den Sendemittenfrequenzen $f_A$, $f_B$, $f_C$ und $f_D$ kann es in diesem Fall aber bereits im Sendesignal zu Störungen der Orthogonalitätsbedingung zwischen den Unterträgern der benachbarten Frequenzblöcke kommen, die letztendlich aufgrund des fehlenden Schutzabstands zu Zwischenträgerinterferenzen (Inter Carrier Interference, ICI) und damit zur Verschlechterung der Übertragungsqualität führen können.

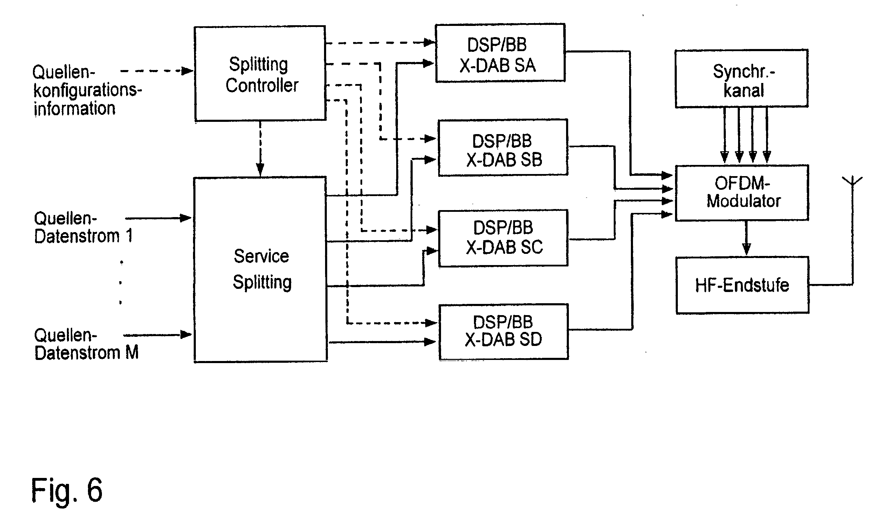

Eine Ausführungsform des Senders, der diese Nachteile nicht aufweist, ist in Fig. 6 gezeigt. Demnach erfolgt die Zusammenfassung der Signale auf der Ebene der digitalen Basisbandsignalverarbeitung (DSP/BB X-DAB SA - SD) nach differentieller Modulation der Unterträger der Einzelblöcke und noch vor der eigentlichen OFDM-Signalgenerierung. Die OFDM-Signalgenerierung lässt sich mittels eines Bausteins zur Inversen Schnelle-Fourier-Transformation (IFFT) realisieren, auf dem D/A-Wandler und daraufhin ein I/Q-Modulator folgen. Von Vorteil ist dabei, dass, während bei der ersten Ausführungsform des Senders für die einzelnen Frequenzblöcke zur Generierung zu einem OFDM-Symbols gehörenden Zeitsignals jeweils eine IFFT in der Größe $N > K + 1$ mit $N$ als Zweierpotenz eingesetzt werden muss ($N = 256$ bei Mode III bis $N = 2048$ bei Mode I), bei der in Fig. 6 gezeigten Ausführungsform insgesamt nur eine einzige IFFT der Größe $N' > K'$ erforderlich ist ($N' = 1024$ bei Mode III bis $N' = 8192$ bei Mode I). Dabei wird jedem X-DAB-Block eine vom gewählten Mode abhängige, feste Belegung des IFFT-Eingangsvektors zugewiesen, auf der die entsprechenden differentiell modulierten. PSK-Symbole abgelegt sind. Folgend auf die IFFT wird im Sender nur noch eine einzige D/A-Wandlung (jeweils ein Baustein für den I- bzw. den Q-Kanal) sowie ein einziger I/Q-Modulator benötigt. Aufgrund der größeren IFFT-Bandbreite muss die D/A-Wandlung allerdings mit der vierfachen Taktrate erfolgen, d. h., die Dauer des Abtastintervalls nach der IFFT beträgt nur etwa $0{,}122\,\mu s$ anstatt $0{,}488\,\mu s$ bei der ersten Ausführungsform des Senders. Als Sendemittenfrequenz wird die Frequenz $f_{S0}$ genutzt, wie in Fig. 4 dargestellt.

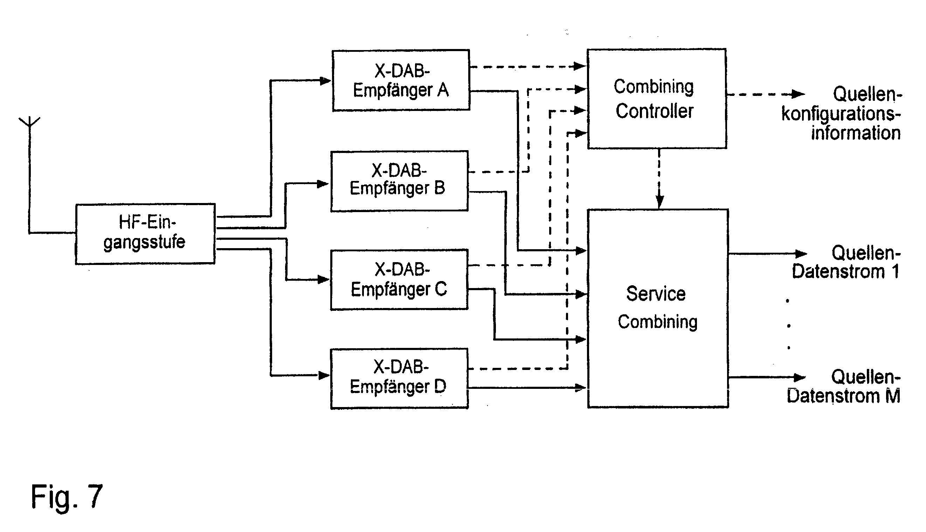

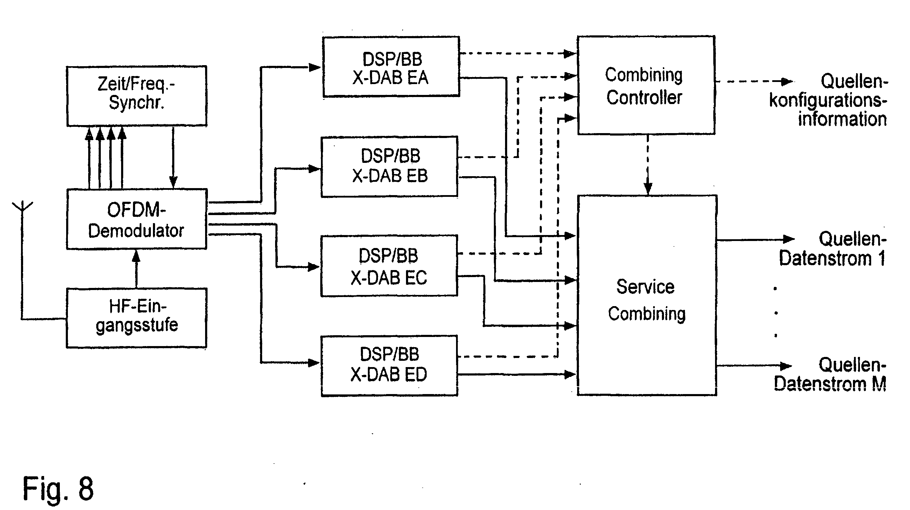

Anhand von Fig. 7 und 8 werden nunmehr Breitband-X-DAB-Empfänger erläutert, die das Verständnis der Erfindung erleichtern und keine Ausführungsbeispiele der Erfindung darstellen.

Um auf der Empfangsseite des Sendesystems den gesamten Datenstrom im breitbandigen Sendesignal auswerten zu können, sind zwei Prinzipien gemäß Fig. 7 und 8 möglich. Zum einen können bei senderseitig vier Schmalband-X-DAB-Sender vier Schmalband-X-DAB-Empfänger parallel eingesetzt werden, die auf die jeweiligen Frequenzblockmittenfrequenzen $f_A$ bis $f_D$ abgestimmt sind und so den Ensembleinhalt des korrespondierenden Blocks auswerten (siehe Fig. 7). Aufgrund der Tatsache, dass die Frequenzblöcke direkt nebeneinander liegen, kommt es bei Einsatz der Schmalband-Empfänger zu einem Übersprechen (ICI) aufgrund des Einbeziehens der zu den Nachbarblöcken gehörenden Unterträger im FFT-Baustein des OFDM-Demodulators. Dies hat jedoch praktisch keinen ungünstigen Einfluss auf die Übertragungsqualität, da bei der vorher besprochenen Senderrealisierung (siehe Fig. 6) sämtliche Träger im gleichen Frequenzraster liegen, so dass die Orthogonalitätsbedingung nicht verletzt wird. Auch die negativen Auswirkungen des Doppler-Effekts beim mobilen Empfang werden hierdurch nur minimal verstärkt. Die vier Empfängerausgangsdatenströme werden im Service Combiner wieder zu einem oder mehreren Gesamtdatenströmen zusammengesetzt. Die Steuerung des soeben erläuterten Breitband-Empfängers bezüglich der Datenströme erfolgt anhand der Auswertung der in den FIC übertragenen Informationen im Combining Controller analog zum DAB- bzw. X-DAB-Konzept.

Eine Alternative zu dem vorstehend erläuterten Empfänger analog zum Sender gemäß Fig. 6 ist in Fig. 8 gezeigt. Anstatt vier Schmalband-Empfänger direkt parallel einzusetzen, kann demnach die Signalrückgewinnung auch nur mit einem einzigen OFDM-Demodulator erfolgen. Dieser Breitband-Empfänger ist durch einen auf die Frequenz $f_{S0}$ abgestimmten I/Q-Demodulator, einen A/D-Wandler pro I- und Q-Zweig sowie eine nachfolgende FFT der Größe $N'$ implementierbar. Die Werte des FFT-Ausgangsvektors können nach einer entsprechenden Zuweisung wieder der digitalen Basisbandsignalverarbeitung von vier parallelen X-DAB-Empfängern (DSP/BB X-DAB EA - ED) zugewiesen werden, deren Ausgangsdatenströme anschließend, wie vorstehend erläutert, zu einem Gesamtdatenstrom zusammengefasst werden.

Diese zweite Ausführungsform des Empfängers ist seiner ersten Ausführungsform dann überlegen, wenn es darum geht, den gesamten Datenstrom auszuwerten. Mit dem vorstehend erläuterten breitbandigen X-DAB-Sender/Empfänger-Konzept lässt sich aber auch eine so genannte hierarchische Übertragung eines Datenstroms bewerkstelligen. Voraussetzung hierfür ist, dass der Quellendatenstrom in mehrere Einzelströme separiert werden kann, wobei diese unterschiedliche Bedeutung bzw. Wichtigkeit für die Qualität des zugehörigen Dienstes besitzen, beispielsweise bezüglich der Bildqualität. So ist es beispielsweise möglich, den Fehlerschutz für wichtigere Teildatenströme zu verstärken und für unwichtigere abzusenken, dafür aber in diesem Bereich eine größere Datenrate zu übertragen. Änderungen des Fehlerschutzes selbst innerhalb eines Übertragungsrahmens sind mit dem X-DAB-System einfach durchführbar, beim eingangs erläuterten DVB-T-System jedoch nicht möglich. Verteilt man senderseitig die Datenströme gemäß ihrer Bedeutung auf die einzelnen Frequenzblöcke, beginnend beispielsweise bei der niedrigsten Frequenz, sind Empfangsqualität und Empfängerkosten gegeneinander austauschbar, wobei ein technisch einfacher Empfänger beispielsweise nur einen Frequenzblock, beispielsweise Block 1, auswertet, der auf die Mittenfrequenz $f_A$ abgestimmt ist. In diesem Fall ist der Empfänger identisch mit dem normalen X-DAB-Schmalband-Empfänger mit maximaler FFT-Größe $N' = N = 2048$. Um die Dienstqualität zu verbessern, muss ein weiterer Block hinzugefügt und mit ausgewertet werden, beispielsweise Block 2, der auf die Mittenfrequenz $f_{S1}$ abgestimmt ist. Da eine FFT der maximalen Größe $N' = 4096$ erforderlich ist, muss der Empfänger bereits entsprechend breitbandig sein. Bei Videoübertragung kann dies beispielsweise einen Qualitätsschritt von VHS hin zu PAL bedeuten. Die Frequenzblöcke 3 und 4 können ebenfalls in diesem Schema mit einem separaten Dienst belegt und unabhängig von den Frequenzblöcken 1 und 2 ausgewertet werden, wobei der Empfänger auf die Mittenfrequenz $f_{S2}$ abgestimmt ist.

Bei den vorstehend erläuterten Frequenzblöcken ist auch ein zusätzlicher Teilstrom zum Frequenzblock 1 bzw. 2 übertragbar, was zu einer weiteren Qualitätsverbesserung des Dienstes beiträgt. Um in diesem Fall beispielsweise volle Bildqualität zu erreichen, ist der komplexeste und damit kostenaufwendigste Empfänger einzusetzen, mit maximaler FFT-Größe $N' = 8192$ bei vierfacher Parallelisierung der X-DAB-Basisbandsignalverarbeitung. Das Anordnen eines nicht belegten Trägers zwischen den einzelnen Frequenzblöcken führt bei allen Empfängertypen unabhängig von der FFT-Größe und der entsprechend zu wählenden Mittenfrequenz dazu, dass das Eingangssignal stets gleichanteilfrei ist, wodurch eine optimale Aussteuerung der A/D-Wandler gewährleistet ist.

## Patentansprüche

1. Verfahren zum Senden von hochratigen Mehrwertdiensten zu mobilen Teilnehmern mit mindestens zwei gleichzeitig ausgestrahlten, nebeneinander liegenden Frequenzblöcken in einem Gleichwellennetz, auf die ein dem jeweiligen Diensteinhalt entsprechend quellencodierter digitaler Eingangsdatenstrom gemultiplext wird, **dadurch gekennzeichnet, dass** das Senden nach dem X-DAB-System (Extended Digital Audio Broadcasting System) erfolgt und dass zwischen den Frequenzblöcken, die X-DAB-Frequenzblöcke sind, eine freie Trägerfrequenz eingefügt wird.

2. Sendeverfahren nach Anspruch 1, **dadurch gekennzeichnet, dass** das Senden nach den X-DAB-System (Extended Digital Audio Broadcasting System) erfolgt, dass der Eingangsdatenstrom in mehrere Einzeldatenströme separiert wird, wobei diese Einzeldatenströme unterschiedliche Bedeutung bzw. Wichtigkeit für die Qualität des Dienstes besitzen, und dass die Einzeldatenströme nach ihrer Bedeutung bzw. Wichtigkeit auf einzelne Frequenzblöcke, die X-DAB-Frequenzblöcke sind, verteilt werden.

3. Sendeverfahren nach Anspruch 1 oder 2, **dadurch gekennzeichnet, dass** die den mehreren X-DAB-Frequenzblöcken entsprechenden Signale zu einem gemeinsamen Ausgangssignal zusammengefasst gesendet werden.

4. Sendeverfahren nach Anspruch 1, 2 oder 3, **dadurch gekennzeichnet, dass** die den mehreren X-DAB-Frequenzblöcken entsprechenden Signale auf der Ebene der digitalen Basisbandsignalverarbeitung (DSP/BB X-DAB SA - SD) nach einer differentiellen Modulation der Unterträger von Einzelblöcken noch vor einer eigentlichen OFDM-Signalgenerierung zusammengefasst werden.

5. Sendeverfahren nach Anspruch 4, **dadurch gekennzeichnet, dass** die OFDM-Signale durch Inverse Schnelle-Fourier-Transformation (IFFT), gefolgt von einer D/A-Wandlung und I/Q-Modulation, generiert werden.

## Claims

1. Process for the transmission of high-rate value-added services to mobile users with at least two simultaneously broadcast, adjacent frequency blocks in a common-frequency network, a digital input data stream, source-coded according to the particular service contents, being multiplexed onto said frequency blocks, **characterized in that** transmission is according to the X-DAB system (Extended Digital Audio Broadcasting System) and a free carrier frequency is inserted between the frequency blocks, which are X-DAB frequency blocks.

2. Transmission process according to claim 1, **characterized in that** transmission is according to the X-DAB system (Extended Digital Audio Broadcasting System), **in that** the input data stream is separated into a plurality of individual data streams, said individual data streams being of different significance and/or importance for the quality of the service, and **in that**, according to their significance and/or importance, the individual data streams are distributed over individual frequency blocks, which are X-DAB frequency blocks.

3. Transmission process according to claim 1 or 2, **characterized in that** the signals corresponding to the plurality of X-DAB frequency blocks are combined to form one common output signal.

4. Transmission process according to claim 1, 2 or 3, **characterized in that** the signals corresponding to the plurality of X-DAB frequency blocks are combined at the level of digital baseband signal processing (DSP/BB X-DAB SA - SD) after differential modulation of the subcarriers of individual blocks, still before actual OFDM signal generation.

5. Transmission process according to claim 4, **characterized in that** the OFDM signals are generated by Inverse Fast Fourier Transformation (IFFT), followed by D/A conversion and I/Q modulation.

## Revendications

1. Procédé pour l'émission de services à valeur ajoutée à haut débit vers des abonnés mobiles avec au moins deux blocs de fréquence contigus émis simultanément sur un réseau monofréquence sur lesquels un courant de données d'entrée numériques codé à la source conformément au contenu de service concerné est multiplexé, **caractérisé en ce que** l'émission a lieu selon le système X-DAB (Extended Digital Audio Broadcasting System) et qu'une fréquence porteuse libre est insérée entre les blocs de fréquence qui sont des blocs de fréquence X-DAB.

2. Procédé d'émission selon la revendication 1, **caractérisé en ce que** l'émission a lieu selon le système X-DAB (Extended Digital Audio Broadcasting System), que le courant de données d'entrée est séparé en plusieurs courants de données individuelles, ces courants de données individuelles ayant une signification ou importance différente pour la qualité du service, et que les courants de données individuelles sont répartis en fonction de leur signification ou importance sur différents blocs de fréquence qui sont des blocs de fréquence X-DAB.

3. Procédé d'émission selon la revendication 1 ou 2, **caractérisé en ce que** les signaux correspondants aux différents blocs de fréquence X-DAB sont émis sous forme d'un signal de sortie commun.

4. Procédé d'émission selon les revendications 1, 2 ou 3, **caractérisé en ce que** les signaux correspondants aux différents blocs de fréquence X-DAB sont regroupés au niveau du traitement des signaux en bande de base numériques (DSP/BB X-DAB SA - SD) après la modulation différentielle des sous-porteuses des blocs individuels et avant même la génération de signaux OFDM proprement dits.

5. Procédé d'émission selon la revendication 4, **caractérisé en ce que** les signaux OFDM sont générés par la Transformation de Fourier Rapide Inverse (IFFT), suivie d'une conversion numérique-analogique et d'une modulation IQ.

Synchronisationskanal

| Bl. 1 | Block 2,..., L+1 | Block L+2,..., m | Block m+1,..., n | Block n+1,..., L |
|---|---|---|---|---|

←— FIC —→

DAB-MSC 1

X-DAB Service Channel (XSC)

DAB-MSC 2

←———————— Main Service Channel (MSC) ————————→

Fig. 1

Fig. 2

EP 0 974 210 B1

Fig. 3

EP 0 974 210 B1

EP 0 974 210 B1

Frequenzblock A
K+1 Unterträger

Frequenzblock B
K+1 Unterträger

Frequenzblock C
K+1 Unterträger

Frequenzblock D
K+1 Unterträger

$f_A$  $f_{S1}$  $f_B$  $f_{S0}$  $f_C$  $f_{S2}$  $f_D$

ca. 1,5 MHz

ca. 6,2 MHz

Fernsehkanal mit 7(8) MHz Bandbreite im VHF(UHV)-Bereich

Fig. 4

Fig. 5

EP 0 974 210 B1

EP 0 974 210 B1

Quellenkonfigurationsinformation

Splitting
Controller

DSP/BB
X-DAB SA

Synchr.-
kanal

Service
Splitting

DSP/BB
X-DAB SB

OFDM-
Modulator

Quellen-
Datenstrom 1

DSP/BB
X-DAB SC

HF-Endstufe

Quellen-
Datenstrom M

DSP/BB
X-DAB SD

Fig. 6

Fig. 7

EP 0 974 210 B1

Fig. 8